# EUROPÄISCHE PATENTSCHRIFT

(11) **EP 3 488 122 B1**
(45) Veröffentlichungstag und Bekanntmachung des Hinweises auf die Patenterteilung: **06.12.2023**
(21) Anmeldenummer: 17732796.2
(22) Anmeldetag: 07.06.2017
(51) Int. Cl.: F16F 13/14

(54) **HYDRAULISCH DÄMPFENDES LAGER**
HYDRAULICALLY DAMPING BEARING
PALIER À AMORTISSEMENT HYDRAULIQUE

(30) Priorität: 19.07.2016 DE 102016113309
(43) Veröffentlichungstag der Anmeldung: 29.05.2019
(73) Patentinhaber: Vibracoustic SE, 64293 Darmstadt (DE)
(72) Erfinder: WERNER, Philipp, 21339 Lüneburg (DE); KARDOES, Hilrich, 21423 Winsen (DE)
(74) Vertreter: Patentanwälte Olbricht Buchhold Keulertz
(86) Internationale Anmeldenummer: PCT/EP2017/063880
(87) Internationale Veröffentlichungsnummer: WO 2018/015064

(56) Entgegenhaltungen:
- EP-A1- 0 798 487
- DE-A1-102013 105 326
- DE-A1-102014 017 386
- DE-B3-102011 106 435
- DE-C1- 4 137 692
- US-A- 4 768 760

## Beschreibung

Die vorliegende Erfindung betrifft ein hydraulisch dämpfendes Lager, insbesondere Fahrwerkslager oder Aggregatelager, mit einer den Kern umgebenden Außenhülse und einem elastomeren Tragkörper, der den Kern und die Außenhülse miteinander verbindet, wobei der Tragkörper eine erste Arbeitskammer und eine zweite Arbeitskammer voneinander trennt, die mit Fluid gefüllt und über einen Dämpfungskanal und wenigstens einen Überdruckkanal miteinander verbunden sind.

Hydraulisch dämpfende Lager der eingangs genannten Art werden als Fahrwerkslager oder Aggregatelager in Kraftfahrzeugen eingesetzt, um auftretende Schwingungen zu dämpfen und/oder zu tilgen. Während einer Relativbewegung von Kern zu Außenhülse bzw. umgekehrt wird eine der beiden Arbeitskammern komprimiert. Dadurch strömt das darin befindliche Fluid über den Dämpfungskanal in die andere Arbeitskammer. Hierdurch wird ein Dämpfungs- und/oder Tilgungseffekt erzielt.

In Folge hoher dynamischer Beanspruchungen können in den Arbeitskammern hohe Innendrücke auftreten, die zu hohen Belastungen und infolgedessen zur Beschädigung des Lagers führen können. Zum Abbau dieser hohen Innendrücke können Lager der eingangs genannten Art wenigstens einen Überdruckkanal aufweisen, über den das Fluid bei hohen Drücken strömen kann. Der Überdruckkanal kann auch als Überströmkanal oder Entkopplungskanal bezeichnet werden.

Um das Fluid während seiner bestimmungsgemäßen Dämpferarbeit an einem Strömen durch den Überdruckkanal zu hindern, ist es bekannt, in den Überdrucckanal wenigstens ein Ventilelement einzubringen, das den Überdruckkanal verschließt. Dadurch strömt das Fluid nur über den Dämpfungskanal, so dass das Lager moderate Schwingungsamplituden bedämpfen oder tilgen kann. Erst bei Überschreiten eines vorgegebenen Differenzgrenzdrucks in den Arbeitskammern verschwenkt das Ventilelement in eine Offenstellung und gibt den Überdruckkanal frei. Dadurch kann das Fluid zum Druckausgleich durch den Überdruckkanal strömen.

Derartige Lager gehen aus der DE 42 33 572 C2, DE 195 03 445 C2 und DE 603 16 914 T2 hervor. Die darin offenbarten hydraulisch dämpfenden Lager weisen einen Kern, eine den Kern umgebende Außenhülse und einen den Kern und die Außenhülse miteinander verbindenden elastomeren Tragkörper auf, wobei der Tragkörper den Innenraum in eine erste und eine zweite Arbeitskammer unterteilt, die über einen Dämpfungskanal und Überdruckkanäle miteinander verbunden sind. Jeder Überdruckkanal ist mit einem Ventilelement versehen, die in den Überdrucckanal ragen und diese verschließen. Bei Überschreiten eines vorgegebenen Differenzgrenzdruckes verschwenken die Ventilelemente in eine vorbestimmte Richtung und geben so die Überdruckkanäle frei.

Ferner geht aus US 7,798,477 B2 ein hydraulisch dämpfendes Lager hervor, in dessen Überdruckkanäle jeweils ein senkrecht von dem Tragkörper abragendes Ventilelement eingebracht ist. Um die einseitige Wirkungsweise der Ventilelemente zu gewährleisten und dessen Steifigkeit zu erhöhen, ist an die Ventilelemente einseitig eine Verrippung angeformt. Bei entgegengesetzten Druckverhältnissen versteifen die Rippen das Ventilelement und verhindern größtenteils ein Öffnen des Ventilelementes.

Aus DE 10 2014 017386 A1 geht ein hydroelastisches Lager hervor, das einen Kern, eine den Kern radial umgebende Außenhülse und einen den Kern und die Außenhülse miteinander verbindenden Federkörper aufweist. Der Federkörper begrenzt zwei mit einem Dämpfungsfluid gefüllte Arbeitskammern, die über einen Drosselkanal und Ventilkanäle miteinander verbunden sind. Die Ventilkanäle werden jeweils von einem zweiseitig an den Federkörper angebundenen Ventilsteg blockiert, das bei Überschreiten eines spezifischen Druckunterschieds zwischen den Arbeitskammern öffnet.

Zudem geht aus DE 41 37 692 C1 ein hydraulisch dämpfendes Lager hervor, das ein äußeres Lagerteil, ein inneres Lagerteil und einen dazwischen an geordneten Elastomerkörper aufweist. Der Elastomerkörper begrenzt zwei mit einem Dämpfungsmittel gefüllte Kammern, die über einen Drosselkanal miteinander verbunden sind. Zudem sind die Kammern über einen Überströmkanal miteinander verbunden, der sich zwischen dem äußeren Lagerteil und einem Mantelabschnitt eines in den Elastomerkörper integrierten Zwischenrohres erstreckt. Innerhalb des Überstromkanals ist ein als Dichtwulst ausgebildetes Sperrglied angeordnet, das den Überstromkanal verschließt und in Abhängigkeit vom hydraulischen Druck der Kammern öffnet.

Der vorliegenden Erfindung liegt die Aufgabe zugrunde, ein hydraulisch dämpfendes Lager zu schaffen, das ein verbessertes Ventilelement in Bezug auf seine Lebensdauer sowie eine bessere Tunebarkeit der Ventilcharakteristik zur Verfügung stellt.

Zur Lösung der Aufgabe wird ein hydraulisch dämpfendes Lager mit den Merkmalen nach Anspruch 1 vorgeschlagen.

Vorteilhafte Ausgestaltungen des hydraulisch dämpfenden Lagers sind Gegenstand der abhängigen Ansprüche.

In einem Aspekt der Erfindung weist das hydraulisch dämpfende Lager, insbesondere Fahrwerkslager oder Aggregatelager, einen Kern, eine den Kern umgebende Außenhülse und einen elastomeren Tragkörper auf, der den Kern und die Außenhülse miteinander verbindet, wobei der Tragkörper eine erste Arbeitskammer und eine zweite Arbeitskammer voneinander trennt, die mit Fluid gefüllt und über einen Dämpfungskanal und wenigstens einen Überdruckkanal miteinander verbunden sind, wobei ein verschwenkbares Ventilelement vorgesehen ist, das dreiseitig an dem Tragkörper angebunden ist, wobei das Ventilelement in einer Schließstellung den Überdruckkanal verschließt und bei Überschreiten eines vorbestimmten Differenzgrenzdruckes in den Arbeitskammern in eine Offenstellung verschwenkt, um die beiden Arbeitskammern fluidleitend miteinander zu verbinden, wobei eine separate Stützeinrichtung vorgesehen ist, die einseitig an dem Ventilelement anliegt und das Ventilelement in der Schließstellung abstützt.

Die einseitig an dem Ventilelement anliegende Stützeinrichtung stützt das Ventilelement in seiner Schließstellung ab, so dass bei einem Differenzdruck auf beiden Seiten des Ventilelements, welcher einen Fluidstrom in der Schließstellung zur Folge hätte, eine Deformation des Ventilelementes verhindert wird. Dadurch treten insbesondere im Bereich der Anbindung des Ventilelements beziehungsweise an dessen Wurzel keine hohen Biege- beziehungsweise Zugspannungen auf. Dadurch ist die Lebensdauer des Ventilelementes und des hydraulisch dämpfenden Lagers erhöht. Durch die dreiseitige Anbindung des Ventilelements weist das Ventilelement eine hohe Steifigkeit beziehungsweise einen hohen Widerstand gegen das öffnungsbedingte Durchbiegen auf.

Unter einer separaten Stützeinrichtung ist vorliegend eine getrennt hergestellte und nicht mit dem Ventilelement stoffschlüssig verbundene Stützeinrichtung zu verstehen. Unter einseitig ist vorliegend nur eine Seite des Ventilelements betreffend zu verstehen. Das bedeutet, dass die Stützeinrichtung nur an einer Seite des Ventilelementes anliegt. Das Verschwenken des Ventilelementes in seine Offenstellung kann auch als Öffnungsrichtung und das Verschwenken des Ventilelementes in seine Schließstellung kann auch als Sperrrichtung bezeichnet werden.

Insbesondere verschwenkt das Ventilelement in seine Offenstellung in Strömungsrichtung oder Fließrichtung des Fluids, während das Ventilelement in die entgegengesetzte Fließrichtung in die Schließstellung verschwenkt.

Das Ventilelement kann eine Ventilfahne und eine Wurzel aufweisen. Die Ventilfahne ist über die Wurzel an dem Tragkörper angebunden. In der Schließstellung kann die Ventilfahne mit ihrem freien Ende an einer äußeren Begrenzung, wie beispielsweise der Außenhülse, dichtend anliegen, um den Überströmkanal zu verschließen. Die Ventilfahne kann auch als Ventillappen bezeichnet werden.

Bevorzugt ist das Ventilelement innerhalb des Überdruckkanals angeordnet. Das Ventilelement kann an dem Tragkörper angebunden sein. Hierzu kann das Ventilelement, insbesondere dessen Wurzel, kraftschlüssig, formschlüssig und/oder stoffschlüssig mit dem Tragkörper und/oder der Außenhülse verbunden sein.

Das hydraulisch dämpfende Lager kann wenigstens zwei Überdruckkanäle aufweisen, wobei in jedem Überdruckkanal ein verschwenkbares Ventilelement vorgesehen ist, welches dreiseitig an dem Tragkörper angebunden ist und in einer Schließstellung jeweils einen der Überdruckkanäle verschließt und bei Überschreiten eines vorbestimmten Differenzgrenzdrucks in den Arbeitskammern in eine Offenstellung verschwenkt, um die beiden Arbeitskammern fluidleitend miteinander zu verbinden, wobei wenigstens eine separate Stützeinrichtung vorgesehen ist, die einseitig an den Ventilelementen anliegt und die Ventilelemente in der Schließstellung abstützen. In einer vorteilhaften Ausgestaltung ist jeweils eine separate Stützeinrichtung vorgesehen, die einseitig an jeweils einem Ventilelement anliegt und das Ventilelement in der Schließstellung abstützt. Bevorzugt weist eine einzige die beiden Ventilelemente abstützende separate Stützeinrichtung ein Filmscharnier auf, so dass die Stützeinrichtung den Tragkörper beliebig weit umfassen kann.

In einer vorteilhaften Ausgestaltung ist das Ventilelement ein Rampenventil. Ein Rampenventil ist dadurch definiert, dass das Ventilelement im dynamisch unbelasteten Zustand des Lagers nicht senkrecht zum Fluidstrom, der sich unter dynamischer Last einstellt, steht, sondern bereits eine Neigung in Strömungsrichtung aufweist. Dadurch ist ein Rampenventil in Öffnungsrichtung nur mit geringen Dehnungen beaufschlagt. Die Stützeinrichtung ermöglicht ein weiches Rampenventil mit einem großen Öffnungsquerschnitt, da die auftretenden Deformationen bei Differenzdrücken entgegen der Fließrichtung durch die mechanische Abstützung des Ventilelementes stark reduziert sind.

In einer vorteilhaften Ausgestaltung ist das Ventilelement seitlich an einem von der Innenhülse in radialer Richtung abragenden Tragstollen des Tragkörpers angebunden. Durch die seitliche Anordnung des Ventilelements an dem Tragkörper weist das Ventilelement, insbesondere die Ventilfahne, eine große Dehnlänge auf, da dessen Bauraum nicht eingeschränkt ist. Dadurch entstehen beim Verschwenken des seitlich angeordneten Ventilelements in die Offenstellung nur geringe, kaum schädigende Dehnungen an dessen freiem Ende und keine Risse, die zu einem permanent geöffneten Überdruckkanal führen können. Demgemäß weist das seitlich angeordnete Ventilelement eine hohe Lebensdauer auf. Darüber hinaus kann die Ventilcharakteristik des seitlich an dem Tragkörper festgelegten Ventilelements einfach abgestimmt werden. Beispielsweise kann das Ventilelement aufgedickt werden. Darüber hinaus ist das seitliche Ventilelement unempfindlich gegenüber Veränderungen des statischen Innendrucks in den Arbeitskammern. Ferner weist das seitlich angeordnete Ventilelement eine hohe Wirkfläche auf und ist einfach und kostengünstig herstellbar. Ein seitlich an dem Tragkörper positioniertes, dreiseitig angebundenes Ventilelement kann auch als Flossenventil bezeichnet werden.

Das seitlich an dem Tragstollen angeordnete Ventilelement kann innerhalb der Arbeitskammer angeordnet sein. Bei zwei die beiden Arbeitskammern miteinander verbindenden Überdruckkanälen ist es von Vorteil, wenn wenigstens eines der Ventilelemente seitlich an einem der Tragstollen angeordnet ist.

In einer vorteilhaften Ausgestaltung ist die Geometrie des Ventilelementes in Öffnungsrichtung derart ausgebildet, dass nur geringe Dehnungen im Ventilelement und an seiner Anbindung, insbesondere der Wurzel und dem freien Ende der Ventilfahne, entstehen.

In einer vorteilhaften Ausgestaltung liegt das Ventilelement in seiner Schließstellung dichtend an der Außenhülse und/oder an der Stützeinrichtung an. Dadurch wird der Überströmkanal in der Schließstellung sicher abgedichtet. Insbesondere liegt ein freies Ende der Ventilfahne dichtend an der Außenhülse und/oder an der Stützeinrichtung an. Liegt das Ventilelement dichtend an der Stützeinrichtung an, so erhöht sich die Gestaltungsfreiheit des Dichtbereichs des Ventilelements, insbesondere der Ventilfahne, da sich die strengen geometrischen Vorgaben an die Außenhülse dann von der Ventilgeometrie abkoppeln lassen. Liegt das Ventilelement in seiner Schließstellung dichtend an der Außenhülse an, so übernimmt die Stützeinrichtung bevorzugt nur eine Stützfunktion.

In einer vorteilhaften Ausgestaltung ist die Stützeinrichtung in dem Überdruckkanal angeordnet. Dadurch wird eine verbesserte Abstützung des Ventilelements erzielt.

In einer vorteilhaften Ausgestaltung bildet die Stützeinrichtung den Überdruckkanal wenigstens teilweise aus.

In einer vorteilhaften Ausgestaltung weist die Stützeinrichtung wenigstens eine Durchflussöffnung auf. Über die Durchflussöffnung wird das Ventilelement einseitig angeströmt, gleichzeitig wird ein Öffnen des Ventilelements in der Schließstellung verhindert. Hierdurch werden die auftretenden Dehnungen an der Anbindung des Ventilelements, insbesondere der Wurzel der Ventilfahne, reduziert und somit die Lebensdauer des Ventilelementes und des hydraulisch dämpfenden Lagers im Hinblick auf seine bestimmungsgemäßen Dämpfungsfunktionen erhöht. Die Stützeinrichtung kann mehrere Durchflussöffnungen aufweisen, wobei die Durchflussöffnungen durch Trennstege voneinander getrennt sind. Diese Trennstege stützen das Ventilelement, insbesondere die Ventilfahne, effektiver als der Rand einer einzelnen großen Durchflussöffnung, und wirken so einem Durchstanzen durch Drücke in der Schließstellung entgegen. Mit zunehmender Anzahl der Trennstege kann bei gleichem Gesamtquerschnitt der Durchflussöffnungen die Gefahr eines Durchstanzens reduziert werden.

In einer vorteilhaften Ausgestaltung ist die Ventilcharakteristik über die Größe der Durchflussöffnung und/oder die Positionierung der Durchflussöffnung relativ zu dem Ventilelement einstellbar. So kann die Durchflussöffnung nahe an dem freien Ende des Ventilelements oder an der Wurzel des Ventilelements positioniert sein. Durch die Positionierung näher an der Wurzel des Ventilelements sind größere Differenzdrücke erforderlich, um das Ventil zu öffnen. Über die Variation der Größe der Durchflussöffnung lässt sich steuern, wieviel Fluid maximal durch den Überdruckkanal bei gegebenem Differenzdruck strömen kann.

In einer vorteilhaften Ausgestaltung bildet der Überdruckkanal die Stützeinrichtung. Hierzu kann die Stützeinrichtung mit dem Tragkörper und/oder der Außenhülse, insbesondere materialeinheitlich, verbunden sein.

In einer erfindungsgemäßen Ausgestaltung weist die Stützeinrichtung ein zwischen dem Tragkörper und der Außenhülse einlegbares Teil auf. Bevorzugt liegt das einlegbare Teil radial innen an dem Tragkörper und radial außen an der Außenschale an. Das einlegbare Teil kann aus Kunststoff oder Metall hergestellt sein.

In einer vorteilhaften Ausgestaltung ist die Stützeinrichtung stoffschlüssig mit dem einlegbaren Teil verbunden. Insbesondere ist die Stützeinrichtung materialeinheitlich mit dem einlegbaren Teil verbunden.

In einer vorteilhaften Ausgestaltung ist die Stützeinrichtung ein Schalenelement. In einer vorteilhaften Ausgestaltung bildet das Schalenelement den Überdruckkanal. Der Überdruckkanal kann z. B. rechteckiger Form sein. Dabei wird der Überdruckkanal durch das Schalenelement und/oder den Tragkörper gebildet und wird außenumfangseitig durch die Außenhülse begrenzt. Bevorzugt bildet ein Abschnitt des Überdrucckanals die Stützeinrichtung. Hierzu kann der vorhandene Kanalquerschnitt verwendet werden. So kann der Querschnitt des Überdruckkanals vom Ventilelement von außen abgedichtet werden. Ferner ist es möglich, dass der am Ventilelement anliegende Querschnitt des Überdruckkanals verringert wird oder in der Art optimiert wird, dass das Ventilelement bei einem Druckgefälle in Schließrichtung nicht an der Durchflussöffnung beschädigt wird. In Schließstellung kann das Ventilelement, insbesondere die Ventilfahne, nicht in die Öffnung des Überdruckkanals hineingedrückt werden, da die Perforation des Überdruckkanals so ausgebildet ist, dass das Ventilelement, insbesondere die Ventilfahne, gestützt ist. Ist der Druck im Überdruckkanal in Öffnungsrichtung zu hoch, öffnet sich der durch das Ventilelement verschlossene Überdruckkanal.

In einer vorteilhaften Ausgestaltung ist die Stützeinrichtung ein Gitter. Eine als Gitter ausgebildete Stützeinrichtung ist kostengünstig in der Herstellung.

In einer vorteilhaften Ausgestaltung ist die Stützeinrichtung zwischen der Außenhülse und dem Tragkörper fixiert. Bevorzugt ist die Stützeinrichtung zwischen der Außenhülse und dem Tragkörper fixiert, wenn die Stützeinrichtung ein einlegbares Teil aufweist. Vorteilhaft ist die Stützeinrichtung formschlüssig und/oder kraftschlüssig zwischen der Außenhülse und dem Tragkörper fixiert.

Erfindungsgemäß ist das einlegbare Teil als eine Kanalschale ausgebildet, wobei in eine Außenoberfläche der Kanalschale der Überdruckkanal und/oder der Dämpfungskanal eingebracht ist, wobei der Überdruckkanal und/oder der Dämpfungskanal über in die Kanalschale eingebrachte Durchflussöffnungen mit den Arbeitskammern in Verbindung steht, und wobei das Ventilelement in der Schließstellung wenigstens eine Durchflussöffnung verschließt. Bevorzugt sind der Überdruckkanal und/oder der Dämpfungskanal als in die Außenoberfläche der Kanalschale eingebrachte, insbesondere nutförmige, Vertiefungen ausgebildet. Der Überdruckkanal und/oder der Dämpfungskanal können jeweils über eine Durchflusseintrittsöffnung und eine Durchflussaustrittsöffnung mit den beiden Arbeitskammern in Verbindung stehen. Bevorzugt verschließt das Ventilelement die Durchflussaustrittsöffnung des Überdruckkanals. Vorteilhaft ist die Kanalschale aus Kunststoff oder Metall hergestellt.

In einer vorteilhaften Ausgestaltung sind zwischen dem Tragkörper und der Außenhülse zwei einlegbare Teile angeordnet, wobei die zwei einlegbaren Teile eine erste Kanalschale und eine zweite Kanalschale bilden, wobei in jede der Außenoberflächen der Kanalschalen ein Abschnitt des Dämpfungskanals und/oder wenigstens ein Überdruckkanal eingebracht ist, die über in die Kanalschalen eingebrachte Durchflussöffnungen mit den Arbeitskammern in Verbindung stehen, und wobei ein erstes Ventilelement in einer Schließstellung wenigstens eine in die erste Kanalschale eingebrachte Durchflussöffnung und ein zweites Ventilelement in einer Schließstellung wenigstens eine in die zweite Kanalschale eingebrachte Durchflussöffnung verschließt. Die beiden Abschnitte des Dämpfungskanals bilden dann im zusammengesetzten Zustand der Kanalschalen wenigstens Teile des Dämpfungskanals. Der Überdruckkanal und/oder der Dämpfungskanal können jeweils über eine Durchflusseintrittsöffnung und eine Durchflussaustrittsöffnung mit den beiden Arbeitskammern in Verbindung stehen. Bevorzugt verschließt jeweils ein Ventilelement eine Durchflussaustrittsöffnung eines Überdruckkanals.

Erfindungsgemäß ist das einlegbare Teil als eine Kanalschale ausgebildet, wobei in eine Außenoberfläche der Kanalschale der Dämpfungskanal eingebracht ist, und wobei der Dämpfungskanal mit einer als Überdruckkanal ausgebildeten Kurzschlussöffnung versehen ist, die das Ventilelement in der Schließstellung verschließt. Bei Überschreiten eines vorbestimmten Differenzdrucks zwischen dem Innendruck im Dämpfungskanal im Bereich des Ventilelements und dem Innendruck der im Ventilelement angrenzenden Arbeitskammer verschwenkt das Ventilelement und öffnet die Kurzschlussöffnung. Dadurch kann der Dämpfungskanal gleichzeitig die Funktion des Überdruckkanals ausüben. Ferner kann neben der als Überdruckkanal ausgebildeten Kurzschlussöffnung im Dämpfungskanal wenigstens ein weiterer Überdruckkanal in die Kanalschale eingebracht sein. Bevorzugt ist die Länge des mittels Kurzschlussöffnung geöffneten Überdruckkanals als Teil des Dämpfungskanals kurz, um impulsartige Druckspitzen abbauen zu können.

In einer vorteilhaften Ausgestaltung weist das einlegbare Teil einen Endanschlag auf. Das einlegbare Teil kann der Endanschlag oder Teil eines Endanschlagsystems sein. Der Endanschlag kann aus Kunststoff oder Metall hergestellt sein. Ferner ist auch eine Kombination einer eingelegten Kanalschale mit einem integrierten Endanschlag und einer Stützeinrichtung möglich.

In einer vorteilhaften Ausgestaltung weist der Tragkörper an seinen Stirnseiten jeweils eine Kammerwand auf, die die beiden Arbeitskammern begrenzen. Insbesondere ist das Ventilelement an dem Tragstollen und an den Kammerwänden und somit dreiseitig festgelegt. Das Ventilelement kann stoffschlüssig, insbesondere materialeinheitlich, mit den Kammerwänden verbunden sein. Die Kammerwände sind bevorzugt als blähweiche Elastomermembranen ausgebildet. Ferner können die Kammerwände ringförmig sein.

In einer vorteilhaften Ausgestaltung sind die Kammerwände mit jeweils einer ringförmigen Stützstruktur versehen. Die ringförmigen Stützstrukturen können aus Metall oder Kunststoff hergestellt sein. Sie begrenzen die Kammerwände außenumfangsseitig. Zwischen den ringförmigen Stützstrukturen und der Außenhülse kann eine Dichtung in das Lager integriert sein, um zwischen den Arbeitskammern und der Außenhülse ein geschlossenes, fluiddichtes Kammersystem zu schaffen. Die Dichtung kann aus einem Elastomer gebildet sein. Ferner kann die Dichtung auch als eine in die ringförmige Stützstruktur eingebrachte Schweißnaht, wie beispielsweise eine Laserschweißnaht, ausgebildet sein. Die beiden ringförmigen Stützstrukturen erhöhen die Steifigkeit des elastomeren Tragkörpers. Darüber hinaus kann der elastomere Tragkörper über die beiden ringförmigen Stützstrukturen axial kalibriert werden. Die wenigstens eine Stützeinrichtung verhindert während einer axialen Kalibrierung ein Ausbeulen des Ventilelementes, so dass die Dichtfunktion des Ventilelementes im Überdruckkanal auch bei starker axialer Kalibrierung aufrechterhalten werden kann. Die ringförmigen Stützstrukturen können formschlüssig, kraftschlüssig und/oder stoffschlüssig mit den Kammerwänden verbunden sein. Beispielsweise können die ringförmigen Stützstrukturen an die Kammerwände anvulkanisiert oder in die Kammerwände einvulkanisiert sein.

In einer vorteilhaften Ausgestaltung ist in den Tragkörper ein Fensterrohr eingebracht. Das Fensterrohr kann zwei Ringe aufweisen, die durch wenigstens zwei Stege miteinander verbunden sind. Das Fensterrohr kann aus Metall oder Kunststoff hergestellt sein. Das Fensterrohr, insbesondere dessen Stege, erhöht die Steifigkeit des Tragkörpers, da sie die Tragstollen außenumfangsseitig begrenzen. Zudem gewährleistet das Fensterrohr eine Dichtfunktion zwischen Tragkörper und Außenhülse. Die Dichtung kann beispielsweise als Elastomerdichtung ausgebildet sein oder im Falle eines Kunststoffkäfigs auch als Schweißnaht ausgeführt sein.

In einer vorteilhaften Ausgestaltung weist die Stützeinrichtung eine dem Ventilelement zugewandte Anlageseite auf, die einer Oberflächenkontur des Ventilelements entspricht. Dadurch wird eine ausreichende Abdichtung des Überdruckkanals in der Schließstellung des Ventilelements erzielt, da sich das Ventilelement großflächig an die Stützeinrichtung anlegen kann. Die Anlageseite kann geneigt sein.

In einer weiteren vorteilhaften Ausgestaltung weist die Anlageseite eine geometrische Überdeckung in der Art auf, dass das Ventilelement vorgespannt ist und in eine den Überdruckkanal dichtende Geometrie verformbar ist und die Durchflussöffnung dichtend verschließt. Durch diese Vorspannung kann die Ventilcharakteristik, das heißt die Differenzgrenzdrücke bei denen das Ventilelement beginnt sich zu öffnen sowie der Differenzgrenzdruck, bei dem das Ventilelement vollständig geöffnet ist, das heißt die Offenfläche über dem Ventilelement, die dem Querschnitt des Überdruckkanals entspricht, eingestellt werden.

In einer vorteilhaften Ausgestaltung ist die Anlageseite derart ausgebildet, dass bei einer axialen Kalibrierung des Tragstollens das Ventilelement derart abgestützt ist, dass das Ventilelement seine dichtende Form beibehält. Dadurch beult das Ventilelement bei einer axialen Kalibrierung nicht aus, so dass das Ventilelement seine dichtende Funktion aufrechterhält.

Nachfolgend werden das hydraulisch dämpfende Lager sowie weitere Merkmale und Vorteile anhand von Ausführungsbeispielen näher erläutert, die in den Figuren schematisch dargestellt sind. Hierbei zeigen:
- Fig. 1: eine perspektivische Ansicht eines Kerns, Tragkörpers und eines Ventilelementes eines hydraulisch dämpfenden Lagers gemäß einer ersten Ausführungsform;
- Fig. 2: einen Querschnitt durch das hydraulisch dämpfende Lager gemäß der ersten Ausführungsform mit einer Stützeinrichtung gemäß einer ersten Ausführungsform;
- Fig. 3: eine vergrößerte Darstellung der Einzelheit III in Fig. 2;
- Fig. 4: die Einzelheit von Fig. 3 mit einer Stützeinrichtung gemäß einer zweiten Ausführungsform;
- Fig. 5: die Einzelheit von Fig. 3 mit einer Stützeinrichtung gemäß einer dritten Ausführungsform;
- Fig. 6: die Einzelheit von Fig. 3 mit einer Stützeinrichtung gemäß einer vierten Ausführungsform;
- Fig. 7A: eine erste Variante einer Geometrie für eine Durchflussöffnung für eine Stützeinrichtung;
- Fig. 7B: eine zweite Variante einer Geometrie für Durchflussöffnungen für eine Stützeinrichtung;
- Fig. 7C: eine dritte Variante einer Geometrie für Durchflussöffnungen für eine Stützeinrichtung;
- Fig. 7D: eine dritte Variante einer Geometrie für Durchflussöffnungen für eine Stützeinrichtung;
- Fig. 8: eine perspektivische Darstellung eines Fensterrohrs, welches in dieser oder ähnlicher Form in dem in Fig. 1 gezeigten Lager zum Einsatz kommen kann;
- Fig. 9: einen Querschnitt durch ein hydraulisch dämpfendes Lager gemäß einer zweiten Ausführungsform mit einer Stützeinrichtung gemäß der ersten Ausführungsform;
- Fig. 10: einen Querschnitt durch ein hydraulisch dämpfendes Lager gemäß einer dritten Ausführungsform,, wobei die Stützeinrichtungen weggelassen sind;
- Fig. 11: eine perspektivische Ansicht des Kerns, des Tragkörpers und des Ventilelementes des in Fig. 10 gezeigten hydraulisch dämpfenden Lagers;
- Fig. 12: einen perspektivische Darstellung des Kerns, des Tragkörpers und des Ventilelementes von Fig. 11 entlang der Linie XII-XII;
- Fig. 13: eine vergrößerte Darstellung der Einzelheit XIII von Fig. 10 mit einer Stützeinrichtung gemäß einer fünften Ausführungsform, bei der das Stützelement das Ventil abstützt, dieses aber dichtend an der Außenhülse anliegt;
- Fig. 14: eine Variante der in Fig. 13 gezeigten Einzelheit mit einem Ventilelement, das anders als in Fig. 13 nicht dichtend an der Außenhülse anliegt, sondern das Loch der Stützeinrichtung gemäß der fünften Ausführungsform dichtend verschließt;
- Fig. 15: eine perspektivische Darstellung des Kerns und des Tragkörpers eines hydraulisch dämpfenden Lagers gemäß einer vierten Ausführungsform ohne dargestellte Außenhülse mit einer Stützeinrichtung gemäß einer sechsten Ausführungsform;
- Fig. 16: einen Querschnitt durch den Kern, den Tragkörper und die Stützeinrichtung von Fig. 15 entlang der Linie XVI-XVI, wobei der Schnitt durch den Hauptdämpfungskanal verläuft;
- Fig. 17: einen Querschnitt durch den Kern, den Tragkörper und die Stützeinrichtung von Fig. 15 entlang der Linie XVII-XVII, wobei der Schnitt durch die beiden Überdruckkanäle verläuft;
- Fig. 18: einen Querschnitt durch das hydraulisch dämpfende Lager gemäß der dritten Ausführungsform mit einer Stützeinrichtung gemäß einer fünften Ausführungsform und einer Stützeinrichtung gemäß einer siebten Ausführungsform, deren Kurzschlussöffnung von einem Ventilelement verschlossen ist; und
- Fig. 19: den in Fig. 18 dargestellten Querschnitt, wobei die Kurzschlussöffnung geöffnet ist.

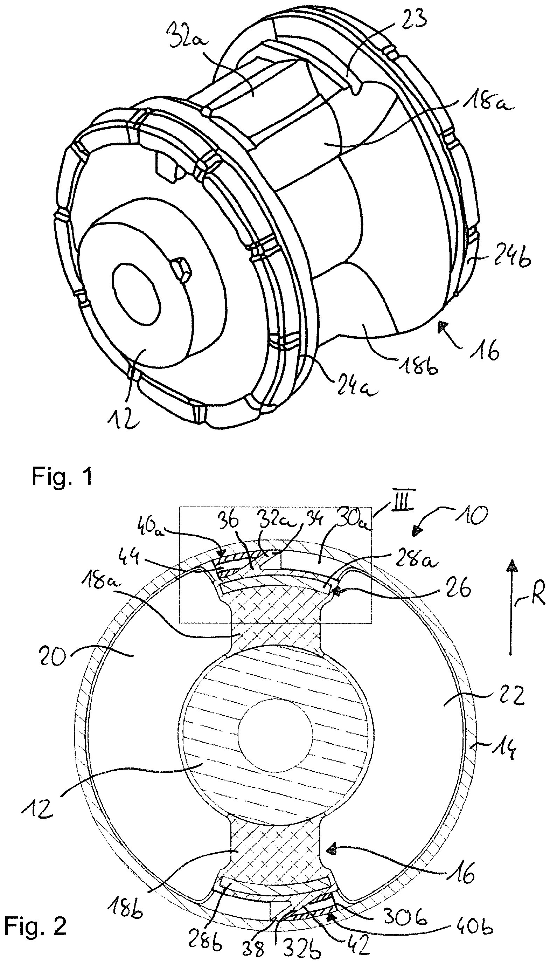

In den Figuren 1 bis 3 ist ein hydraulisch dämpfendes Lager 10 gemäß einer ersten Ausführungsform gezeigt, das als Fahrwerkslager oder Aggregatelager eingesetzt wird.

Das Lager 10 weist einen hohlzylinderförmigen Kern 12, eine den Kern umgebende Außenhülse 14 und einen den Kern 12 und die Außenhülse 14 miteinander verbindenden elastomeren Tragkörper 16 auf.

Wie insbesondere in Fig. 2 ersichtlich ist, weist der Tragkörper 16 zwei von dem Kern 12 in Radialrichtung R entgegengesetzt zueinander abragende Tragstollen 18a, 18b auf, die einen zwischen dem Kern 12 und der Außenhülse 14 gebildeten Innenraum in eine erste Arbeitskammer 20 und eine zweite Arbeitskammer 22 unterteilen. Die Arbeitskammern 20, 22 sind mit einem Fluid gefüllt und über einen Dämpfungskanal 23 miteinander verbunden.

Wie in Fig. 1 ersichtlich ist, weist der Tragkörper 16 zwei Kammerwände 24a, 24b auf, die bevorzugt als blähweiche Elastomermembranen ausgebildet sind. Die Kammerwände 24a, 24b begrenzen die beiden Arbeitskammern 20, 22 stirnseitig.

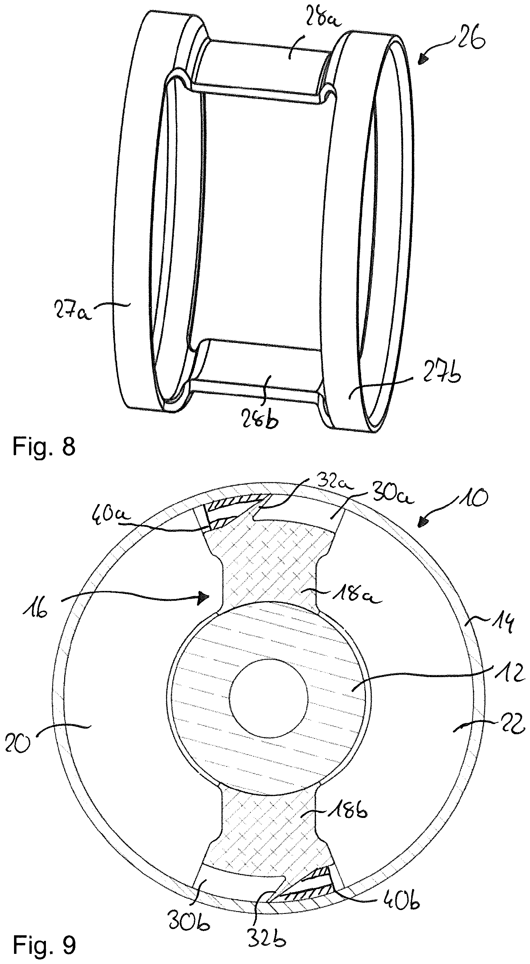

Der Tragkörper 16 weist zudem ein Fensterrohr 26 auf, das in Fig. 8 dargestellt ist. Das Fensterrohr 26 weist zwei Ringe 27a, 27b auf, die durch zwei Stege 28a, 28b miteinander verbunden sind. Die Ringe 27a, 27b sind bevorzugt mit den Kammerwänden 24a, 24b verbunden, insbesondere anvulkanisiert oder einvulkanisiert, während die Stege 28a, 28b in die Tragstollen 18a, 18b eingebracht, insbesondere einvulkanisiert, sind.

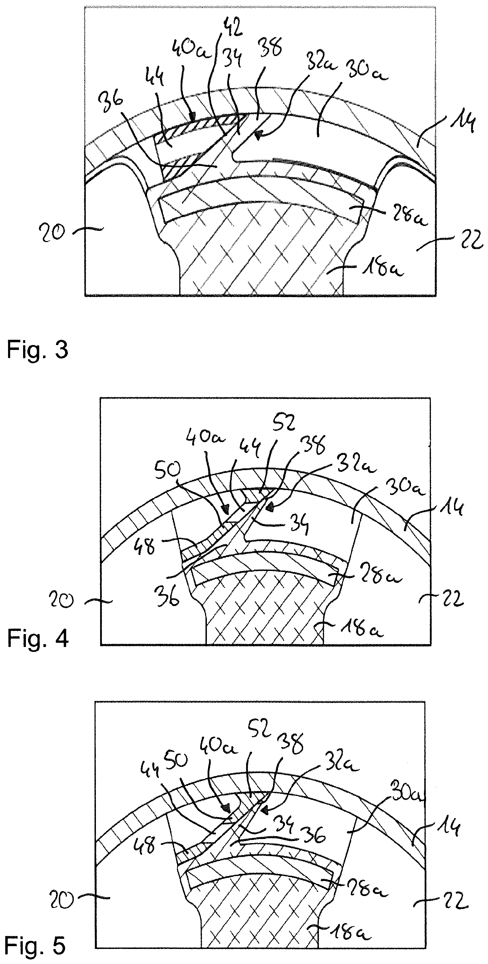

Wie in den Fig. 2 und 3 ersichtlich ist, sind zwischen der Außenhülse 14 und den Tragstollen 18a, 18b beziehungsweise den Stegen 28a, 28b, Überdruckkanäle 30a, 30b angeordnet, die die beide Arbeitskammern 20, 22 miteinander verbinden.

Jeder der Überdruckkanäle 30a, 30b ist mit einem verschwenkbaren Ventilelement 32a, 32b versehen, die in der in den Fig. 2 und 3 gezeigten Schließstellung die Überdruckkanäle 30a, 30b verschließen.

Die Ventilelemente 32a, 32b sind als Rampenventile ausgebildet und weisen eine Ventilfahne 34 und eine Wurzel 36 auf. Die Ventilelemente 32a, 32b sind an die Tragstollen 18a, 18b und die Kammerwände 24a, 24b angebunden. Bevorzugt sind die Ventilelemente 32a, 32b stoffschlüssig und materialeinheitlich an die Tragstollen 18a, 18b und den Kammerwänden 24a, 24b angebunden. In der Schließstellung liegt ein freies Ende 38 der Ventilfahne 34 dichtend an der Außenhülse 14 an.

Bei Überschreiten eines vorbestimmten Differenzgrenzdrucks in den Arbeitskammern 20, 22 verschwenken die beiden Ventilelemente 32a, 32b in eine nicht dargestellte Offenstellung und geben die Überdruckkanäle 30a, 30b frei, so dass das Fluid über die Überdruckkanäle 30a, 30b strömen kann.

Um bei einem Differenzgrenzdruck auf beiden Seiten der Ventilelemente 32a, 32b, welche einen Fluidstrom in Schließstellung zur Folge hätte, eine Deformation der Ventilfahne 34 und damit eine Dehnung der Wurzel 36 zu verhindern, liegt jeweils eine separate Stützeinrichtung 40a, 40b einseitig an den Ventilelementen 32a, 32b an und stützt die Ventilelemente 32a, 32b in deren Schließstellung ab, wie in den Figuren 2 und 3 ersichtlich ist.

Die Stützeinrichtungen 40a, 40b sind als Schalenelemente ausgebildet, die in die Überdruckkanäle 30a, 30b einsetzbar sind. Wie in den Figuren 2 und 3 ersichtlich ist, weisen die Stützeinrichtungen 40a, 40b eine dem Ventilelement 32a, 32b zugewandte Anlageseite 42 auf, die einer Oberflächenkontur der Ventilelemente 32a, 32b entsprechen. Die Stützeinrichtungen 40a, 40b weisen zudem wenigstens eine Durchflussöffnung 44 auf, die als Überdruckkanäle 30a, 30b ausgebildet sind. Über die die Durchflussöffnungen 44 werden die Ventilelemente 32a, 32b angeströmt.

Die Stützeinrichtungen 40a, 40b stützen die Ventilelemente 32a, 32b in ihrer Schließstellung ab, so dass bei einem Differenzdruck auf beiden Seiten der Ventilelemente 32a, 32b, welcher einen Fluidstrom in der Schließstellung zur Folge hätte, eine Deformation der Ventilelemente 32a, 32b verhindert wird. Dadurch treten insbesondere im Bereich der Anbindung der Ventilelemente 32a, 32b, insbesondere an deren Wurzeln 36, keine hohen Biege- beziehungsweise Zugspannungen auf. Dadurch weisen die Ventilelemente 32a, 32b eine hohe Lebensdauer auf. Durch die dreiseitige Anbindung der Ventilelemente 32a, 32, nämlich an die Tragstollen 18a, 18 und die Kammerwände 24a, 24b, weisen die Ventilelemente 32a, 32b eine hohe Steifigkeit beziehungsweise einen hohen Widerstand gegen das öffnungsbedingte Durchbiegen auf.

Nachfolgend werden weitere Ausführungsformen des hydraulisch dämpfenden Lagers 10 sowie der Stützeinrichtung 40a, 40b beschrieben, wobei für deren Beschreibung die bereits zuvor verwendeten Bezugszeichen für gleiche oder funktionsgleiche Teile verwendet werden.

In Fig. 4 ist eine zweite Ausführungsform einer Stützeinrichtung 40a, 40b gezeigt, die sich von der ersten Ausführungsform in ihrer Ausgestaltung unterscheidet. Die in Fig. 4 gezeigte Stützeinrichtung 40a weist einen ersten Schenkel 48 und einen zweiten Schenkel 50 auf, die einen Winkel zueinander einschließen. Der erste Schenkel 48 liegt an dem Tragkörper 16 an. Der zweite Schenkel 50 weist endseitig einen Anlageabschnitt 52 auf, mittels dem der zweite Schenkel 50 an der Außenhülse 14 anliegt. Dadurch ist die Stützeinrichtung 40a formschlüssig zwischen der Außenhülse 14 und dem Tragkörper 16 fixiert. In den zweiten Schenkel 50 ist die Durchflussöffnung 40 eingebracht. Das Ventilelement 32a ist verglichen mit dem in den Figuren 1 bis 3 gezeigten Ventilelement 32a etwas kürzer ausgebildet, so dass das Ventilelement 32a nur an der Stützeinrichtung 40a anliegt, um die Durchflussöffnung 44 zu verschließen. Des Weiteren ist es auch denkbar, dass die Ventilelemente 32a, 32b ähnlich dem in den Figuren 2 und 3 dargestellten Ventilelementen 32a, 32b an der Außenhülse 14 anliegen.

In Fig. 5 ist eine dritte Ausführungsform einer Stützeinrichtung 40a, 40b gezeigt, die sich von der zweiten Ausführungsform in der Positionierung der Durchflussöffnung 44 relativ zu dem Ventilelement 32a unterscheidet. In Fig. 5 ist die Durchflussöffnung 44 näher an der Wurzel 36 des Ventilelements 32a angeordnet.

Durch die Positionierung der Durchflussöffnung 42 näher an der Wurzel 36 des Ventilelements 32a, 32b ist ein größerer Differenzdruck erforderlich, um das Ventilelement 32a, 32b zu öffnen. Demgemäß kann über die Positionierung der Durchflussöffnung 44 relativ zu dem Ventilelement 32a, 32b die Ventilcharakteristik eingestellt werden.

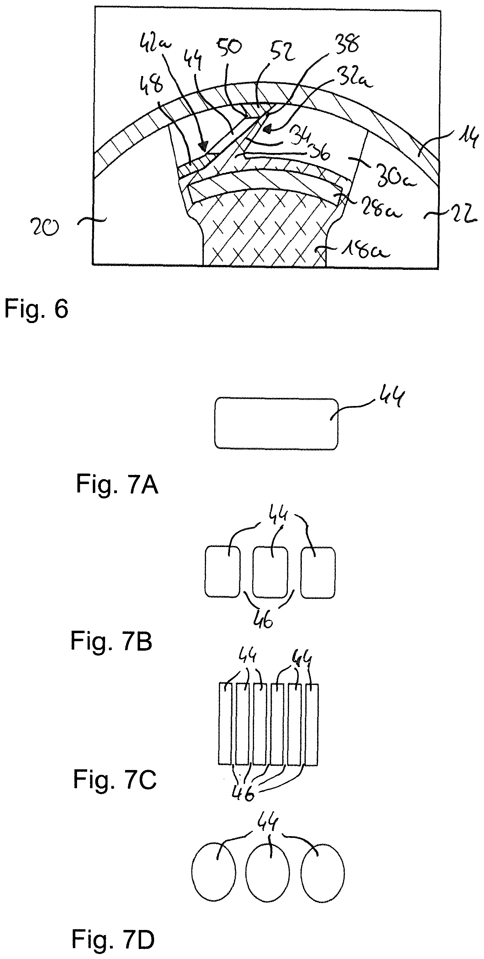

In Fig. 6 ist eine vierte Ausführungsform der Stützeinrichtung 40a, 40b dargestellt, die sich von der zweiten und dritten Ausführungsform dadurch unterscheidet, dass der Querschnitt der Durchflussöffnung 42 größer ist. Durch Variation der Größe der Durchflussöffnung 44 lässt sich steuern, wieviel Fluid maximal durch den Überdruckkanal 30a, 30b bei gegebener Druckdifferenz strömen kann.

In Fig. 7A ist eine erste Variante einer Geometrie für eine Durchflussöffnung 44 dargestellt. Die Durchflussöffnung 44 ist im Querschnitt im wesentlichen rechteckförmig ausgebildet.

In Fig. 7B ist eine zweite Variante einer Geometrie für Durchflussöffnungen 44 dargestellt. Die Durchflussöffnungen 44 sind im Querschnitt im wesentlichen rechteckförmig ausgebildet, wobei die Durchflussöffnungen 44 durch Trennstege 46 voneinander getrennt sind. Die Trennstege 46 haben die Aufgabe, die Ventilfahne 34 mittig zu stützen, um ein Durchstanzen durch Drücke in der Schließstellung zu verhindern.

In Fig. 7C ist eine dritte Variante einer Geometrie für Durchflussöffnungen 44 dargestellt. Die Durchflussöffnungen 44 sind im Querschnitt rechteckförmig ausgebildet und durch eine Vielzahl an Trennstegen 46 voneinander getrennt. Durch die zunehmende Anzahl der Trennstege 46 können bei gleichem Gesamtquerschnitt die Querschnitte jeder der Durchflussöffnungen 44 reduziert werden, so dass die Gefahr eines Durchstanzens sinkt.

In Fig. 7D ist eine vierte Variante einer Geometrie für Durchflussöffnungen 44 gezeigt. Die Durchflussöffnungen 44 sind im Querschnitt kreisförmig ausgebildet. In einer nicht dargestellten Ausführungsform können die Durchflussöffnungen 44 auch im Querschnitt elliptisch oder als Freiformkontur ausgebildet sein, solange sie eine gute Stützwirkung entfalten und einen gleichmäßigen Fluidstrom nicht zu sehr behindern.

In Fig. 8 ist beispielhaft ein Fensterrohr 26 gezeigt, wie es häufig in Lagern 10 gemäß den Figuren 1 und 2 zum Einsatz kommt.

In Fig. 9 ist eine zweite Ausführungsform des hydraulisch dämpfenden Lagers 10 gezeigt, das sich von der ersten Ausführungsform dadurch unterscheidet, dass in den Tragkörper 16 kein Fensterrohr 26 eingebracht ist, sondern die Kammerwände 24a, 24b sind mit nicht dargestellten ringförmigen Stützstrukturen versehen, die die Kammerwände 24a, 24b und Teile der Tragstollen 18a, 18b außenumfangsseitig begrenzen. Über die beiden ringförmigen Stützstrukturen kann der Tragkörper 16 axial kalibriert werden. Die axiale Kalibrierung kann zu einem Stauchen der Tragstollen 18a, 18b und zu einem Ausbeulen der Ventilelemente 32a, 32b führen. Die Stützeinrichtungen 40a, 40b, insbesondere die geometrische Gestaltung der Anlageseite 42, hindern die Ventilelemente 32a, 32b während einer axialen Kalibrierung des Tragkörpers 16 vor einem Ausbeulen. Dadurch kann die Dichtfunktion der Ventilelemente 32a, 32a während einer axialen Kalibrierung aufrechterhalten werden. Die ringförmigen Stützstrukturen können aus Metall oder Kunststoff hergestellt sein. Bevorzugt sind die ringförmigen Stützstrukturen in/an den Tragkörper 16 ein- oder anvulkanisiert. Anstelle der in Fig. 9 gezeigten Stützeinrichtungen 40a, 40b können auch die in den Figuren 4 bis 9 gezeigten Stützeinrichtungen 40a zum Abstützen der Ventilelemente 32a, 32b verwendet werden.

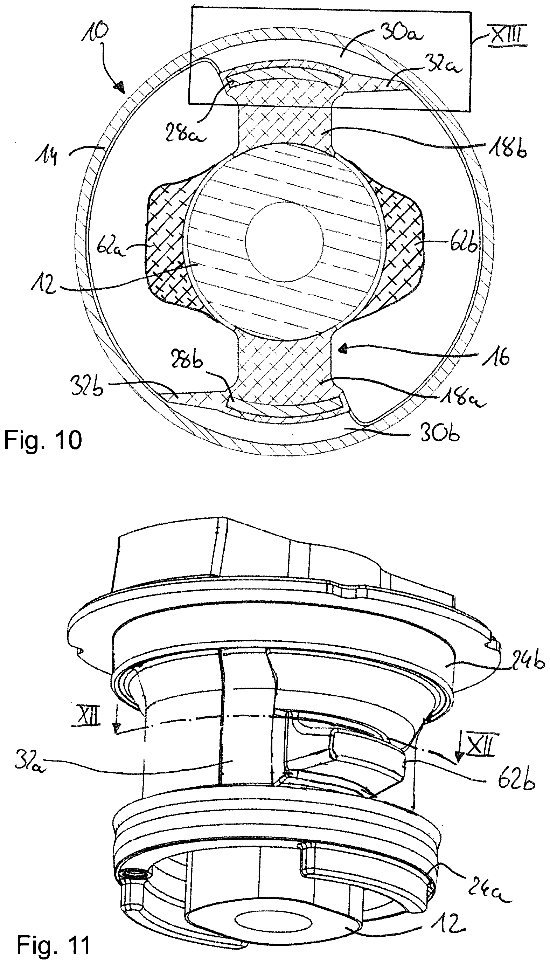

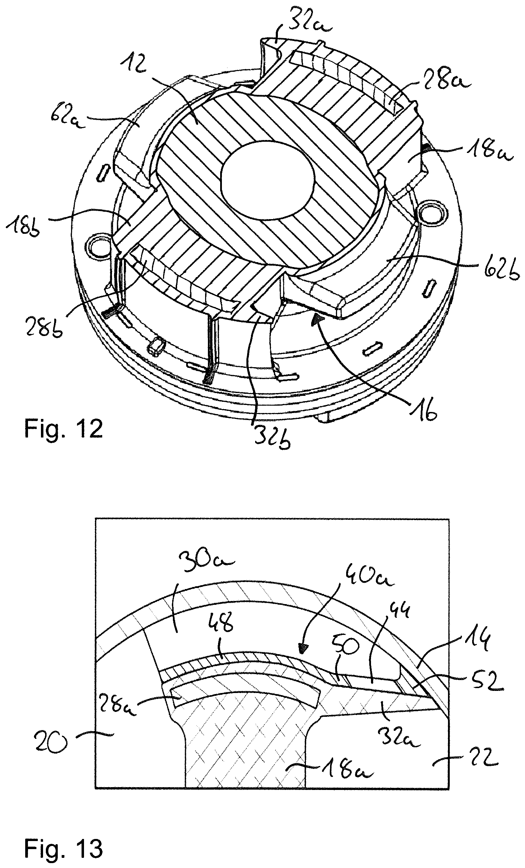

In den Figuren 10 bis 12 ist eine dritte Ausführungsform des hydraulisch dämpfenden Lagers 10 gezeigt. Die dritte Ausführungsform unterscheidet sich von den ersten beiden Ausführungsformen in der Ausgestaltung der Ventilelemente 32a, 32b. Ferner sind in Fig. 9 die Stützeinrichtungen 40a, 40b weggelassen worden. Diese sind jedoch in Fig. 13 dargestellt. Die Ventilelemente 32a, 32b sind seitlich an den Tragstollen 18a, 18b angebunden, und ragen in die Arbeitskammern 20, 22 hinein. Die Ventilelemente 32a, 32b liegen vorliegend dichtend an der Außenhülse 14 an, um die Überdruckkanäle 30a, 30b zu verschließen. In den in den Figuren 10 bis 12 gezeigten Ausführungsformen weist das hydraulisch dämpfende Lager 10 ein Fensterrohr 26 auf, wie es beispielsweise in Fig. 8 dargestellt ist. Ferner kann das in den Figuren 10 bis 12 gezeigte Lager 10 anstelle eines Fensterrohrs die zuvor beschriebenen ringförmigen Stützstrukturen aufweisen.

In Fig. 13 ist eine fünfte Ausführungsform einer Stützeinrichtung 40a, 40b gezeigt, die bei einem hydraulisch dämpfenden Lager 10 gemäß der dritten und vierten Ausführungsform zum Einsatz kommt. Die Stützeinrichtung 40a umfasst, wie die Ausführungsformen zwei bis vier, einen ersten Schenkel 48 und einen zweiten Schenkel 50, wobei die beiden Schenkel 48, 50 im Vergleich zu den Ausführungsformen zwei bis vier einen größeren Winkel zueinander einschließen. Die Stützeinrichtung 40a ist formschlüssig zwischen der Außenhülse 14 und dem Tragkörper 16 fixiert, indem der erste Schenkel 48 an dem Tragstollen 18a, der zweite Schenkel 50 an dem seitlich an dem Tragstollen 18a angebundenem Ventilelement 32a und der Anlageabschnitt 52 des zweiten Schenkels 50 an der Außenhülse 14 anliegen. Die Stützeinrichtung 40a stützt das seitlich angeordnete Ventilelement 32a in diesen Schließstellung ab. Durch Variation der in den zweiten Schenkel 50 eingebrachten Durchflussöffnung 44 kann die Ventilcharakteristik eingestellt werden.

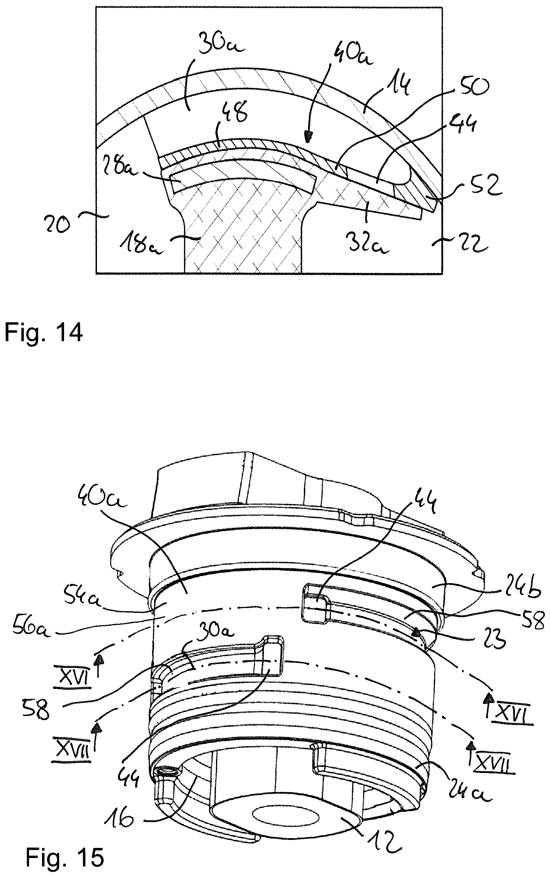

Das in Fig. 14 dargestellte Ventilelement 32a ist im Vergleich zu dem in Fig. 13 dargestellten Ventilelement 32a, 32b nicht mehr gegen die Außenhülse abdichtend ausgeführt, sondern dichtet gegen die Stützeinrichtung 40a ab. Die Stützeinrichtung 40a hat damit sowohl stützende Funktionen, sie ist aber auch Teil der Dichtfunktion.

In den Figuren 15 bis 17 sind eine vierte Ausführungsform des hydraulisch dämpfenden Lagers 10 sowie eine sechste Ausführungsform der Stützeinrichtungen 40a, 40b gezeigt. Die vierte Ausführungsform des hydraulisch dämpfenden Lagers 10 unterscheidet sich von der dritten Ausführungsform dadurch, dass anstelle eines in den Tragkörper eingebrachten Fensterrohrs 26 die Kammerwände 24a, 24b mit den zuvor beschriebenen ringförmigen Stützstrukturen versehen ist. Darüber hinaus weist der Tragkörper 16 von dem Kern 12 abragende Anschläge 62a, 62b auf. Die sechste Ausführungsform der Stützeinrichtungen 40a, 40b unterscheidet sich von den anderen Ausführungsformen dadurch, dass die Stützeinrichtungen 40a, 40b einlegbare Teile 54a, 54b aufweisen, die zwischen dem Tragkörper 16 und der Außenhülse 14 sowie den Kammerwänden 24a, 24b angeordnet sind. Die einlegbaren Teile 54a, 54b sind als eine erste Kanalschale 56a und eine zweite Kanalschale 56b ausgebildet. Die Kanalschalen 56a, 56b können aus Kunststoff oder Metall hergestellt sein. Ferner weist das in den Figuren 15 bis 17 gezeigte Lager 10 die zuvor beschriebenen ringförmigen Stützstrukturen auf. Anstelle der ringförmigen Stützstrukturen kann das in den Figuren 15 bis 17 dargestellte Lager 10 auch mit einem Fensterrohr 26 versehen sein, wie es beispielhaft in Fig. 8 dargestellt ist.

Wie insbesondere in Fig. 15 ersichtlich ist, sind in die Außenoberflächen der Kanalschalen 56a, 56b die Überdruckkanäle 30a, 30b und der Dämpfungskanal 23 eingebracht. Die Überdruckkanäle 30a, 30b und der Dämpfungskanal 23 sind dabei als Vertiefungen 58, insbesondere nutförmige Vertiefungen, in die Kanalschalen 56a, 56b eingebracht. In die Kanalschalen 56a, 56b sind zudem Durchflussöffnungen 44 eingebracht, um die beiden Arbeitskammern 20, 22 über die Überdruckkanäle 30a, 30b und den Dämpfungskanal 23 miteinander zu verbinden.

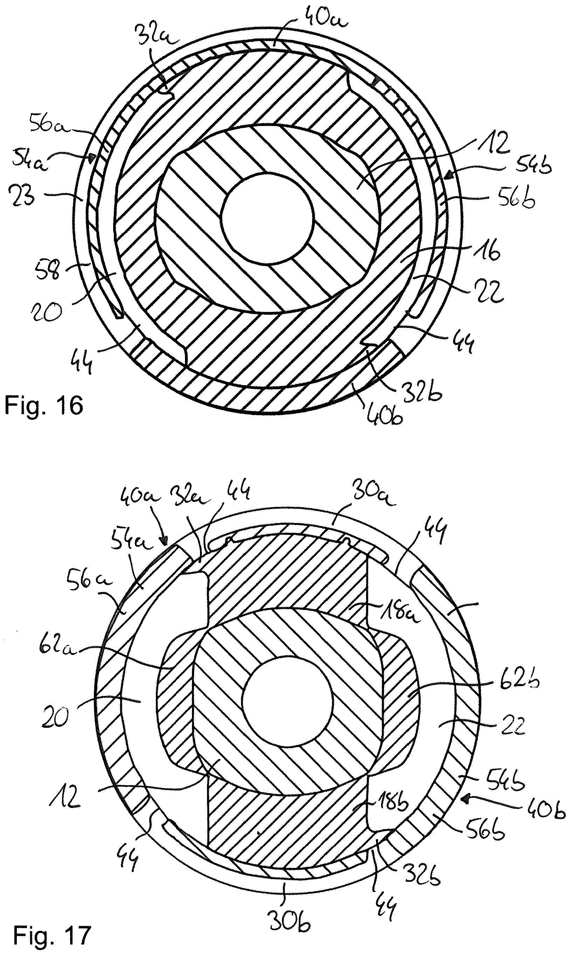

In Fig. 16 ist der Dämpfungskanal 23 ersichtlich, der über zwei Durchflussöffnungen 44 mit den Arbeitskammern 20, 22 in Verbindung steht.

In Fig. 17 sind die Überdruckkanäle 30a, 30b und die Ventilelemente 32a, 32b in ihrer Schließstellung gezeigt, wobei die Ventilelemente 30a, 30b an den Kanalschalen 56a, 56b anliegen und jeweils eine Durchflussöffnung 44 der Überdrucckanäle 30a, 30b verschließen. Bei Überschreiten eines vorbestimmten Differenzgrenzdrucks innerhalb der beiden Arbeitskammern 20, 22 verschwenken die beiden Ventilelemente 32a, 32b in ihre Offenstellung und geben so die Durchflussöffnung 44 frei, so dass das Fluid über die in die Kanalschalen 56a, 56b eingebrachten Überdruckkanäle 30a, 30b strömen kann.

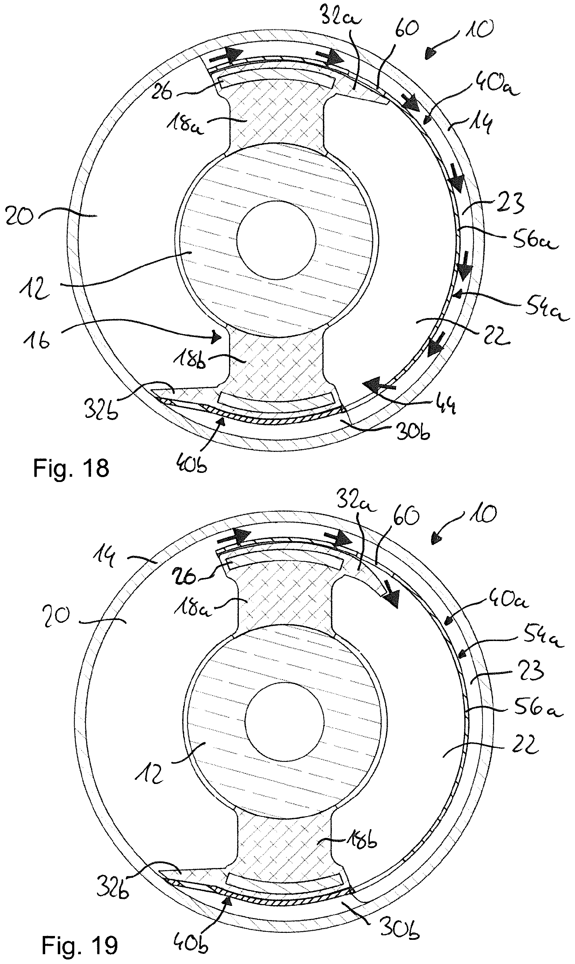

In den Figuren 18 und 19 ist eine siebte Ausführungsform einer Stützeinrichtung 40a und eine fünfte Ausführungsform einer Stützeinrichtung 40b gezeigt, die bei einem hydraulisch dämpfenden Lager 10 gemäß der dritten und vierten Ausführungsform zum Einsatz kommen. Die siebte Ausführungsform unterscheidet sich von der sechsten Ausführungsform darin, dass in die Außenoberfläche der ersten Kanalschale 56a nur der Dämpfungskanal 23 eingebracht ist, wobei der Dämpfungskanal 23 mit einer Kurzschlussöffnung 60 versehen ist. Die Kurzschlussöffnung 60 fungiert dabei als Überdruckkanal und verbindet den Dämpfungskanal 23 mit der zweiten Arbeitskammer 22.

In Fig. 18 ist das erste Ventilelement 32a in der Schließstellung gezeigt, wobei das erste Ventilelement 32a die Kurzschlussöffnung 60 verschließt. Dies ist der Fall, wenn der Druck in der ersten Arbeitskammer 20 größer als in der zweiten Arbeitskammer 22 ist. Dann fließt das Fluid über den Dämpfungskanal 23 zwischen den Arbeitskammern 20, 22, wie durch die Pfeile dargestellt ist.

Bei Überschreiten eines vorbestimmten Differenzgrenzdrucks zwischen dem Kanalinnendruck im Bereich des Ventilelements 30a und in der ersten Arbeitskammer 20 verschwenkt das erste Ventilelement 32a und gibt die Kurzschlussöffnung 60 frei, so dass das Fluid über die Kurzschlussöffnung 60 in die zweite Arbeitskammer 22 strömt, wie in Fig. 19 durch die Pfeile dargestellt ist.

Ferner kann das hydraulisch dämpfende Lager 10 gemäß der dritten und vierten Ausführungsform auch mit zwei Stützeinrichtungen 40a, 40b gemäß der siebten Ausführungsform versehen sein. Zudem weist das in den Figuren 18 und 19 gezeigte Lager 10 ein Fensterrohr 26 auf. Anstelle des Fensterrohrs 26 kann das in den Figuren 18 und 19 dargestellte Lager 10 auch mit ringförmigen Stützstrukturen versehen sein.

In einer weiteren nicht dargestellten Ausführungsform kann die Stützeinrichtung 40a, 40b ein Gitter sein, das in dem Überdruckkanal 30a, 30b eingesetzt ist.

Darüber hinaus kann das in den Figuren 10 bis 12 gezeigte hydraulisch dämpfende Lager 10 die in den Figuren 15 bis 17 gezeigten Kanalschalen 56a, 56b aufweisen, an denen die Ventilelemente 32a, 32b anliegen und die dann als Stützeinrichtungen fungieren.

### Bezugszeichenliste

- 10: Lager
- 12: Kern
- 14: Außenhülse
- 16: Tragkörper
- 18a: Tragstollen
- 18b: Tragstollen
- 20: erste Arbeitskammer
- 22: zweite Arbeitskammer
- 23: Dämpfungskanal
- 24a: Kammerwand
- 24b: Kammerwand
- 26: Fensterrohr
- 27a: Ring
- 27b: Ring
- 28a: Steg
- 28b: Steg
- 30a: Überdruckkanal
- 30b: Überdruckkanal
- 32a: Ventilelement
- 32b: Ventilelement
- 34: Ventilfahne
- 36: Wurzel
- 38: freies Ende
- 40a: Stützeinrichtung
- 40b: Stützeinrichtung
- 42: Anlageseite
- 44: Durchflussöffnung
- 46: Steg
- 48: erster Schenkel
- 50: zweiter Schenkel
- 52: Anlageabschnitt
- 54a: einlegbares Teil
- 54b: einlegbares Teil
- 56a: erste Kanalschale
- 56b: zweite Kanalschale
- 58: Vertiefung
- 60: Kurzschlussöffnung
- 62a: Anschlag
- 62b: Anschlag

- R: Radialrichtung

## Patentansprüche

1. Hydraulisch dämpfendes Lager (10) mit einem Kern (12), einer den Kern (12) umgebenden Außenhülse (14) und einem elastomeren Tragkörper (16), der den Kern (12) und die Außenhülse (14) miteinander verbindet, wobei der Tragkörper (16) eine erste Arbeitskammer (20) und eine zweite Arbeitskammer (22) voneinander trennt, die mit Fluid gefüllt und über einen Dämpfungskanal und wenigstens einen Überdruckkanal (30a, 30b) miteinander verbunden sind, wobei ein verschwenkbares Ventilelement (32a, 32b) vorgesehen ist, das dreiseitig an dem Tragkörper (16) angebunden ist, wobei das Ventilelement (32a, 32b) in einer Schließstellung den Überdruckkanal (30a, 30b) verschließt und bei Überschreiten eines vorbestimmten Differenzgrenzdruckes in den Arbeitskammern (20, 22) in eine Offenstellung verschwenkt, um die beiden Arbeitskammern (20, 22) fluidleitend miteinander zu verbinden, wobei eine separate Stützeinrichtung (40a, 40b) vorgesehen ist, die einseitig an dem Ventilelement (32a, 32b) anliegt und das Ventilelement (32a, 32b) in der Schließstellung abstützt, wobei die Stützeinrichtung (40a, 40b) ein zwischen dem Tragkörper (16) und der Außenhülse (18) einlegbares Teil (54a, 54b) aufweist, **dadurch gekennzeichnet, dass** das einlegbare Teil (54a, 54b) als eine Kanalschale (56a, 56b) ausgebildet ist, wobei in eine Außenoberfläche der Kanalschale (56a, 56b)
- der Überdruckkanal (30a, 30b) und/oder der Dämpfungskanal (23) eingebracht ist, wobei der Überdruckkanal (30a, 30b) und/oder der Dämpfungskanal (23) über in die Kanalschale (56a, 56b) eingebrachte Durchflussöffnungen (44) mit den Arbeitskammern (20, 22) in Verbindung steht, und wobei das Ventilelement (32a, 32b) in der Schließstellung wenigstens eine Durchflussöffnung (44) verschließt, und/oder
- der Dämpfungskanal (23) eingebracht ist, und wobei der Dämpfungskanal (23) mit einer als Überdruckkanal (30a, 30b) ausgebildete Kurzschlussöffnung (60) versehen ist, die das Ventilelement (32a, 32b) in der Schließstellung verschließt.

2. Hydraulisch dämpfendes Lager (10) nach Anspruch 1, **dadurch gekennzeichnet, dass** das Ventilelement (32a, 32b) ein Rampenventil ist, oder dass das Ventilelement (32a, 32b) seitlich an einem von der Innenhülse in radialer Richtung abragenden Tragstollen (18a, 18b) des Tragkörpers (26) angebunden ist.

3. Hydraulisch dämpfendes Lager (10) nach einem der vorhergehenden Ansprüche,
**dadurch gekennzeichnet, dass** die Stützeinrichtung (40a, 40b) den Überdruckkanal (30a, 30b) wenigstens teilweise ausbildet.

4. Hydraulische dämpfendes Lager (10) nach einem der vorhergehenden Ansprüche,
**dadurch gekennzeichnet, dass** die Stützeinrichtung (40a, 40b) wenigstens eine Durchflussöffnung (44) aufweist, und dass vorzugsweise die Ventilcharakteristik über die Größe der Durchflussöffnung (44) und/oder die Positionierung der Durchflussöffnung (44) relativ zu dem Ventilelement (32a, 32b) einstellbar ist.

5. Hydraulisch dämpfendes Lager (10) nach einem der vorhergehenden Ansprüche,
**dadurch gekennzeichnet, dass** der Überdruckkanal (30a, 30b) die Stützeinrichtung (40a, 40b) bildet.

6. Hydraulisch dämpfendes Lager (10) nach einem der vorhergehenden Ansprüche,
**dadurch gekennzeichnet, dass** die Stützeinrichtung (40a, 40b) stoffschlüssig mit dem einlegbaren Teil (54a, 54b) verbunden ist.

7. Hydraulisch dämpfendes Lager (10) nach einem der vorhergehenden Ansprüche ,
**dadurch gekennzeichnet, dass** die Stützeinrichtung (40a, 40b) zwischen der Außenhülse (14) und dem Tragkörper (16) fixiert ist.

8. Hydraulisch dämpfendes Lager (10) nach einem der vorhergehenden Ansprüche,
**dadurch gekennzeichnet, dass** das einlegbare Teil (54a, 54b) einen Endanschlag aufweist.

9. Hydraulische dämpfendes Lager (10) nach einem der vorhergehenden Ansprüche,
**dadurch gekennzeichnet, dass** der Tragkörper (16) an seinen Stirnseiten jeweils eine Kammerwand (24a, 24b) aufweist, die die beiden Arbeitskammern (20, 22) begrenzen.

10. Hydraulisch dämpfendes Lager (10) nach Anspruch 9, **dadurch gekennzeichnet, dass** die Kammerwände (24a 24b) mit jeweils einer ringförmigen Stützstruktur versehen sind.

11. Hydraulisch dämpfendes Lager (10) nach einem der Ansprüche 1 bis 9, **dadurch gekennzeichnet, dass** in den Tragkörper (16) ein Fensterrohr (26) eingebracht ist.

12. Hydraulisch dämpfendes Lager (10) nach einem der vorhergehenden Ansprüche, **dadurch gekennzeichnet, dass** die Stützeinrichtung (40a, 40b) eine dem Ventilelement (32a, 32b) zugewandte Anlageseite (42) aufweist, die einer Oberflächenkontur des Ventilelementes (32a, 32b) entspricht, und dass vorzugsweise die Anlageseite (42) eine geometrische Überdeckung in der Art aufweist, dass das Ventilelement (32a, 32b) vorgespannt ist und in eine den Überdruckkanal (30a, 30b) dichtende Geometrie verformbar ist und die Durchflussöffnung (54) dichtend verschließt.

13. Hydraulisch dämpfendes Lager (10) nach Anspruch 12, **dadurch gekennzeichnet, dass** die Anlageseite (42) derart ausgebildet ist, dass bei einer axialen Kalibrierung des Tragstollens (18a, 18b) das Ventilelement (32a, 32b) derart abgestützt ist, dass das Ventilelement (32a, 32b) seine dichtende Form beibehält.

## Claims

1. Hydraulically damping bearing (10) having a core (12), an outer sleeve (14) surrounding the core (12), and an elastomeric supporting body (16) which connects the core (12) and the outer sleeve (14) to one another, the supporting body (16) separating from one another a first working chamber (20) and a second working chamber (22) which are filled with fluid and are connected to one another via a damping duct and at least one overpressure duct (30a, 30b), a pivotable valve element (32a, 32b) being provided which is connected to the supporting body (16) on three sides, the valve element (32a, 32b) closing the overpressure duct (30a, 30b) in a closed position and pivots into an open position when a predetermined differential limit pressure in the working chambers (20, 22) is exceeded, to connect the two working chambers (20, 22) to one another in a fluid-conducting manner, a separate supporting device (40a, 40b) being provided which bears on one side against the valve element (32a, 32b) and moves the valve element (32a, 32b) in the closed position, the supporting device (40a, 40b) having a part (54a, 54b) which can be inserted between the supporting body (16) and the outer sleeve (18), **characterized in that** the insertable part (54a, 54b) is designed as a channel shell (56a, 56b), wherein in an outer surface of the channel shell (56a, 56b)
- the overpressure channel (30a, 30b) and/or the damping channel (23) is introduced, the overpressure channel (30a, 30b) and/or the damping channel (23) communicating with the working chambers (20, 22) via flow openings (44) introduced into the channel shell (56a, 56b), and the valve element (32a, 32b) closing at least one flow opening (44) in the closed position,
and/or
- the damping channel (23) is introduced, and wherein the damping channel (23) is provided with a short-circuit opening (60) in the form of an overpressure channel (30a, 30b) which closes the valve element (32a, 32b) in the closed position.

2. Hydraulically damping bearing (10) according to claim 1, **characterized in that** the valve element (32a, 32b) is a ramp valve, or that the valve element (32a, 32b) is laterally connected to a support stud (18a, 18b) of the support body (26) projecting from the inner sleeve in the radial direction.

3. Hydraulically damping bearing (10) according to any one of the preceding claims, **characterized in that** the support means (40a, 40b) at least partially forms the overpressure channel (30a, 30b).

4. Hydraulic damping bearing (10) according to any one of the preceding claims, **characterized in that** the support means (40a, 40b) comprises at least one flow opening (44), and **in that** preferably the valve characteristic is adjustable via the size of the flow opening (44) and/or the positioning of the flow opening (44) relative to the valve element (32a, 32b).

5. Hydraulically damping bearing (10) according to any one of the preceding claims, **characterized in that** the overpressure channel (30a, 30b) forms the support device (40a, 40b).

6. Hydraulically damping bearing (10) according to any one of the preceding claims, **characterized in that** the support device (40a, 40b) is connected to the insertable part (54a, 54b) in a materially locking manner.

7. Hydraulically damping bearing (10) according to one of the preceding claims , **characterized in that** the support device (40a, 40b) is fixed between the outer sleeve (14) and the supporting body (16).

8. Hydraulically damping bearing (10) according to any one of the preceding claims, **characterized in that** the insertable part (54a, 54b) comprises an end stop.

9. Hydraulic damping bearing (10) according to one of the preceding claims, **characterized in that** the supporting body (16) has a chamber wall (24a, 24b) on each of its end faces, which delimit the two working chambers (20, 22).

10. Hydraulically damping bearing (10) according to claim 9, **characterized in that** the chamber walls (24a 24b) are each provided with an annular support structure.

11. Hydraulically damping bearing (10) according to any one of claims 1 to 9, **characterized in that** a window tube (26) is introduced into the supporting body (16).

12. Hydraulically damping bearing (10) according to one of the preceding claims, **characterized in that** the support device (40a, 40b) has a contact side (42) facing the valve element (32a, 32b) and corresponding to a surface contour of the valve element (32a, 32b), and **in that** preferably the contact side (42) has a geometrical overlap in such a way that the valve element (32a, 32b) is prestressed and can be deformed into a geometry sealing the overpressure channel (30a, 30b) and sealingly closing the flow-through opening (54).

13. Hydraulically damping bearing (10) of claim 12, **characterized in that** the abutment side (42) is configured such that, upon axial calibration of the support stud (18a, 18b), the valve element (32a, 32b) is supported such that the valve element (32a, 32b) maintains its sealing shape.

## Revendications

1. Support à amortissement hydraulique (10) avec un noyau (12), une douille extérieure (14) entourant le noyau (12) et un corps de support élastomère (16) qui relie le noyau (12) et la douille extérieure (14), le corps de support (16) séparant une première chambre de travail (20) et une deuxième chambre de travail (22), qui sont remplies de fluide et reliées l'une à l'autre par un canal d'amortissement et au moins un canal de surpression (30a, 30b), un élément de soupape pivotant (32a, 32b) étant prévu, lequel est relié sur trois côtés au corps de support (16), l'élément de soupape (32a, 32b) fermant le canal de surpression (30a, 30b) dans une position de fermeture, 30b) et, en cas de dépassement d'une pression différentielle limite prédéterminée dans les chambres de travail (20, 22), il pivote dans une position ouverte pour relier les deux chambres de travail (20, 22) de manière à conduire les fluides, un dispositif de soutien séparé (40a, 40b) étant prévu, qui s'applique d'un côté contre l'élément de soupape (32a, 32b) et qui fait pivoter l'élément de soupape (32a, 32b) en position de fermeture, le dispositif de soutien (40a, 40b) présentant une pièce (54a, 54b) pouvant être insérée entre le corps de support (16) et la douille extérieure (18), **caractérisé en ce que** la pièce (54a, 54b) pouvant être insérée est réalisée sous la forme d'une coque de canal (56a, 56b),
- le canal de surpression (30a, 30b) et/ou le canal d'amortissement (23) étant ménagé dans une surface extérieure de la coque de canal (56a, 56b), le canal de surpression (30a, 30b) et/ou le canal d'amortissement (23) étant en communication avec les chambres de travail (20, 22) par l'intermédiaire d'ouvertures d'écoulement (44) ménagées dans la coque de canal (56a, 56b), et l'élément de soupape (32a, 32b) fermant au moins une ouverture d'écoulement (44) dans la position de fermeture,
et/ou
- le canal d'amortissement (23) étant ménagé dans une surface extérieure de la coque de canal (56a, 56b), et dans lequel le canal d'amortissement (23) est pourvu d'une ouverture de court-circuit (60) conçue comme un canal de surpression (30a, 30b), qui ferme l'élément de soupape (32a, 32b) dans la position de fermeture.

2. Support à amortissement hydraulique (10) selon la revendication 1, **caractérisé en ce que** l'élément de soupape (32a, 32b) est une soupape à rampe, ou **en ce que** l'élément de soupape (32a, 32b) est relié latéralement à une barre de support (18a, 18b) du corps de support (26) dépassant de la douille intérieure dans la direction radiale.

3. Support à amortissement hydraulique (10) selon l'une des revendications précédentes, **caractérisé en ce que** le dispositif de support (40a, 40b) forme au moins partiellement le canal de surpression (30a, 30b).

4. Support à amortissement hydraulique (10) selon l'une des revendications précédentes, **caractérisé en ce que** le dispositif de support (40a, 40b) comporte au moins un orifice d'écoulement (44), et **en ce que**, de préférence, la caractéristique de la soupape est réglable par la taille de l'orifice d'écoulement (44) et/ou le positionnement de l'orifice d'écoulement (44) par rapport à l'élément de soupape (32a, 32b).

5. Support à amortissement hydraulique (10) selon l'une des revendications précédentes, **caractérisé en ce que** le canal de surpression (30a, 30b) constitue le dispositif de support (40a, 40b).

6. Support à amortissement hydraulique (10) selon l'une des revendications précédentes, **caractérisé en ce que** le dispositif de support (40a, 40b) est relié à la pièce insérable (54a, 54b) par une liaison de matière.

7. Support à amortissement hydraulique (10) selon l'une des revendications précédentes, **caractérisé en ce que** le dispositif de support (40a, 40b) est fixé entre la douille extérieure (14) et le corps de support (16).

8. Support à amortissement hydraulique (10) selon l'une des revendications précédentes, **caractérisé en ce que** la pièce insérable (54a, 54b) comporte une butée de fin de course.

9. Support à amortissement hydraulique (10) selon l'une des revendications précédentes, **caractérisé en ce que** le corps de support (16) présente sur chacune de ses faces frontales une paroi de chambre (24a, 24b) qui délimite les deux chambres de travail (20, 22).

10. Support à amortissement hydraulique (10) selon la revendication 9, **caractérisé en ce que** les parois de la chambre (24a 24b) sont pourvues chacune d'une structure de support annulaire.

11. Support à amortissement hydraulique (10) selon l'une des revendications 1 à 9, **caractérisé en ce qu'**un tube à fenêtre (26) est inséré dans le corps de support (16).

12. Support à amortissement hydraulique (10) selon l'une des revendications précédentes, **caractérisé en ce que** le dispositif de support (40a, 40b) présente un côté d'appui (42) tourné vers l'élément de soupape (32a, 32b), qui correspond à un contour de surface de l'élément de soupape (32a, 32b), et **en ce que**, de préférence, le côté d'appui (42) présente un recouvrement géométrique tel que l'élément de soupape (32a, 32b) est précontraint et peut être déformé en une géométrie rendant étanche le canal de surpression (30a, 30b) et ferme de manière étanche l'ouverture de passage (54).

13. Support à amortissement hydraulique (10) selon la revendication 12, **caractérisé en ce que** le côté d'appui (42) est conçu de telle sorte que, lors d'un calibrage axial de la tige de support (18a, 18b), l'élément de soupape (32a, 32b) est soutenu de telle sorte que l'élément de soupape (32a, 32b) conserve sa forme étanche.
